# EUROPEAN PATENT APPLICATION

(11) **EP 0 915 269 A1**
(43) Date of publication of application: **12.05.1999**
(21) Application number: 98309023.4
(22) Date of filing: 04.11.1998
(51) Int. Cl.: F16H 25/18

(54) **Lift and twist mechanism**

(30) Priority: 06.11.1997 GB 9723367
(71) Applicant: Emhart Glass S.A., 6330 Cham (CH)
(72) Inventor: Meyer, Willi, 8307 Effretikon (CH)
(74) Representative: Warren, Anthony Robert

(57) **Abstract**

A lift and twist mechanism for use in an I.S. machine comprises a rod (22) which is driven to move axially and which carries a cam roll (48) running in a cam track (50) which causes twisting movement of the rod upon its axial movement. A lubrication chamber (58) is formed by a cover (52) over the cam track (50), and a passageway (64) formed in the cam roll leads from the lubrication chamber to a central bore (24) of the rod (22), thus to facilitate lubrication of the mechanism.

## Description

This invention is concerned with lift and twist mechanisms.

In the well known I.S. (individual section) type of glass container forming machines, there are several operative components, for example funnel, baffle or blow head, which are, in the operation of the machine, moved into and out of operating position adjacent a mould of the machine by a lift and twist mechanism. Such a mechanism will, in one movement, swing an operative component from an out of the way position into a position over a mould and at the same time move the component down into position against the mould, and in a return movement lift the component from the mould and swing it into its out of the way position.

Conventionally such a lift and twist mechanism is operated by a piston and cylinder device which drives a rod of the piston axially up and down. The operative component is connected to the rod: a cam roll is also attached to the rod and runs in a cam track such that on axial movement of the rod a desired rotational movement of the rod takes place.

Once a glass container forming machine has been set up and put into operation it will normally be maintained in continuous operation for a substantial period of time, often for weeks. Consequently lubrication of the moving parts of a mechanism is very important to avoid excessive wear or even seizing up of a mechanism.

There is a desire to replace the conventional pneumatically operated piston and cylinder device in such mechanisms with servo controlled electric motors, as these offer the possibility of more precise control of the movement of the operative members. However electric motors are essentially rotary, and therefore the mechanism needs to incorporate a device for converting rotary movement to a linear movement. Such a device will have a particular need for good lubrication.

It is an object of the present invention to provide a lift and twist mechanism for use in a glass container making machine which is effectively lubricated.

The present invention provides a lift and twist mechanism comprising
a cylinder block
a rotary motor secured to the block
a spindle driven by the motor
a rod connected to the spindle so that the rod is driven axially by rotation of the spindle, the rod comprising a central bore in which at least part of the spindle lies
a cam roll attached to the rod
a cam track formed in the cylinder block in which the cam roll runs so that on axial movement of the rod a desired rotational movement of the rod takes place
a cover extending over at least the length of the cam track and providing a lubrication chamber
means for supplying lubricant to the lubrication chamber
and a passageway through the cam roll leading from the lubrication chamber to the central bore of the rod.

There now follows a description, to be read with reference to the accompanying drawings, of a lift and twist mechanism embodying the invention.

In the accompanying drawings
Figure 1 shows a side view of a lift and twist mechanism;
Figure 2 shows a view similar to Figure 1 but with a cover removed;

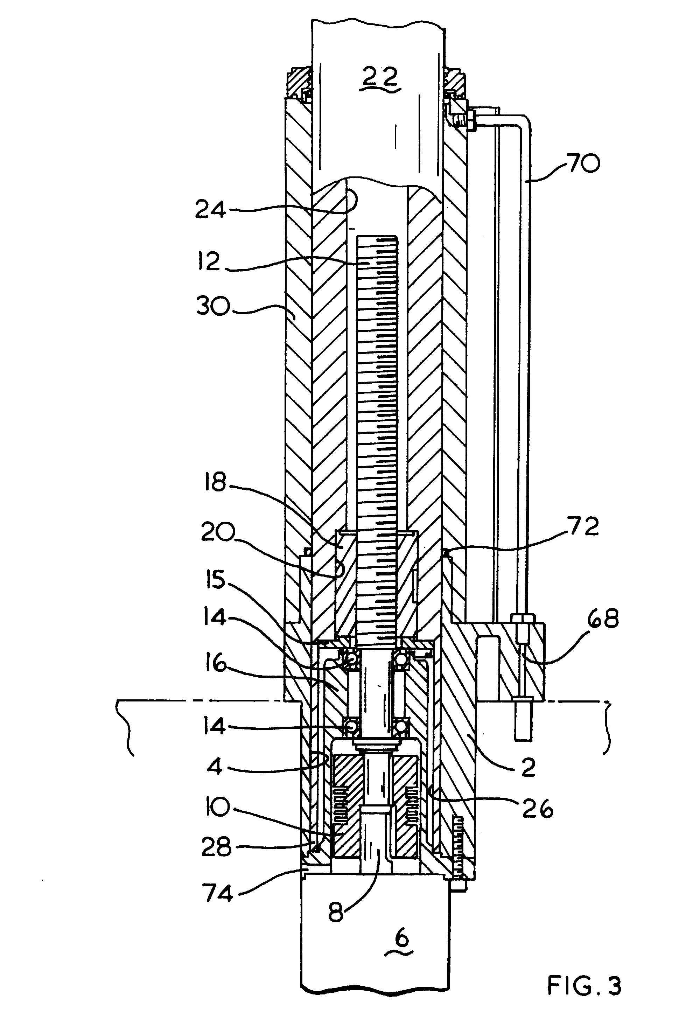

Figure 3 shows a view in vertical section through the mechanism of Figure 1;

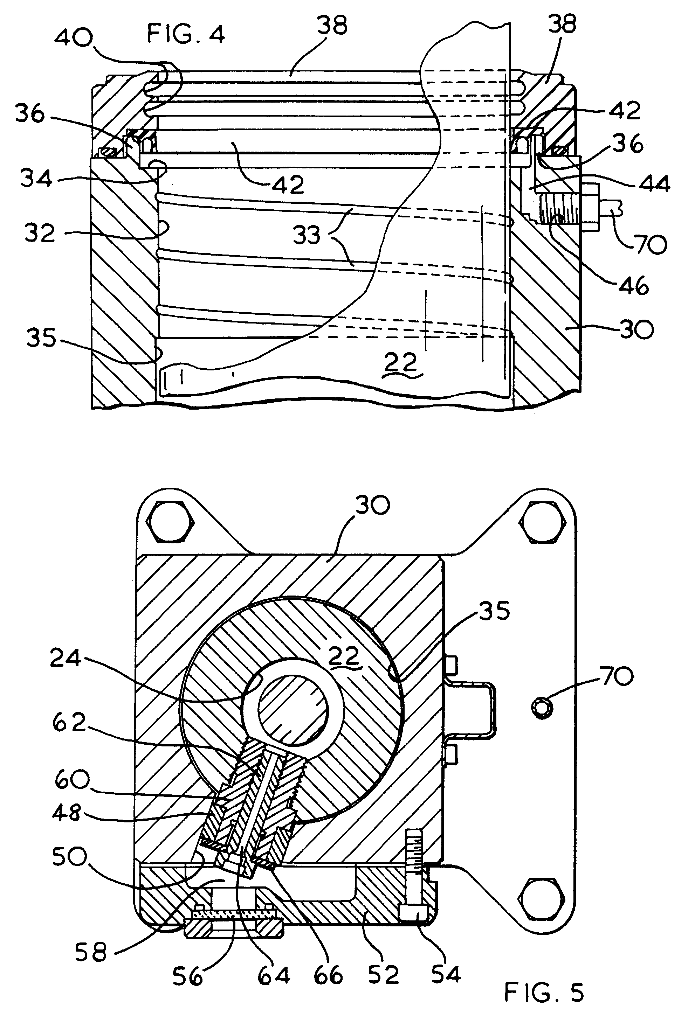

Figure 4 shows a detail of a cylinder block; and
Figure 5 shows a view of a cross section taken along V-V of Figure 1.

A lift and twist mechanism as shown in the drawings is suitable for use with conventional baffle, funnel, blow head and similar mechanisms in a glass container forming machine.

The mechanism comprises a casing 2 by which it may be attached to a table of a forming machine. The casing 2 comprises a central bore 4. A servo motor 6 having a drive shaft 8 is secured to the casing 2. The drive shaft 8 is connected by a flexible coupling 10 to a spindle 12. The spindle 12 is supported by ball bearings 14 in a sleeve 16 which lies in the bore 4 of the casing 2 and is attached to the casing. The sleeve 16 also encloses the coupling 10.

The spindle 12 is threaded along its length and carries a nut 18 which is held in a recess 20 in a rod 22 by a retaining ring 15. The rod 22 is thus connected to the spindle 12 so that the rod 22 is caused to move axially by rotation of the spindle in the nut 18. The rod 22 comprises a central axial bore 24 extending upwardly from the recess 20 in which an upper portion of the spindle lies. The rod 22 also comprises a recess 26 extending downwards from the recess 20 and defined by a cylindrical shell 28.

Secured to the casing 2 and extending upwardly therefrom is a cylinder block 30 through which the rod 22 can move slidably. An upper end portion of the block 30 is provided with an internal bearing surface 32 which engages the outer cylindrical surface of the rod 22. The bearing surface 32 is provided with a helical oil groove 33 which leads from an upper face 34 of the block 30 to an inner relieved portion 35 of the block 30. The relieved portion 35 provides an annular space between the block 30 and the rod 22. Surrounding the face 34 is a lip 36. Fitting around the lip 36 and secured to the block 30 by screws (not shown) so that it is capable of a slight radial float is a scraper 38 which has a grooved surface 40 which is a tight but sliding fit about the outer surface of the rod 22. A sealing ring 42 is compressed between the scraper 38 and the lip 36. A lubrication passage way 44 leads from the face 34 to an opening 46 in the outer surface of the cylinder block 30.

Attached to the rod 22 is a cam roll 48 which extends into a cam track 50 formed in the cylinder block 30. The cam track 50 is so shaped that on axial movement of the rod 22 a desired rotational movement of the rod 22 takes place. A cover 52 is secured to the cylinder block 30 by screws 54 and comprises a viewing glass 56. The cover 52 extends over the length of the cam track 50 and provides a lubrication chamber 58.

The cam roll 48 is freely mounted for rotation on a plug member 60 which is screwed into the rod 22. A threaded member 62 having an axial passageway 64 is secured in the plug member 60 and holds a washer 66 which keeps the cam roll 48 in position on the plug member 60. Thus the passageway 64 leads from the lubrication chamber 58 to the annular space between the spindle 12 and the bore 24.

When the mechanism is in use, the motor 6 is caused to rotate as required to move the spindle 12 and to cause the rod 22, to which operative parts to be moved are attached, to move up and down: movement of the cam roll 48 in the cam track 50 causes the desired rotation of the rod 22.

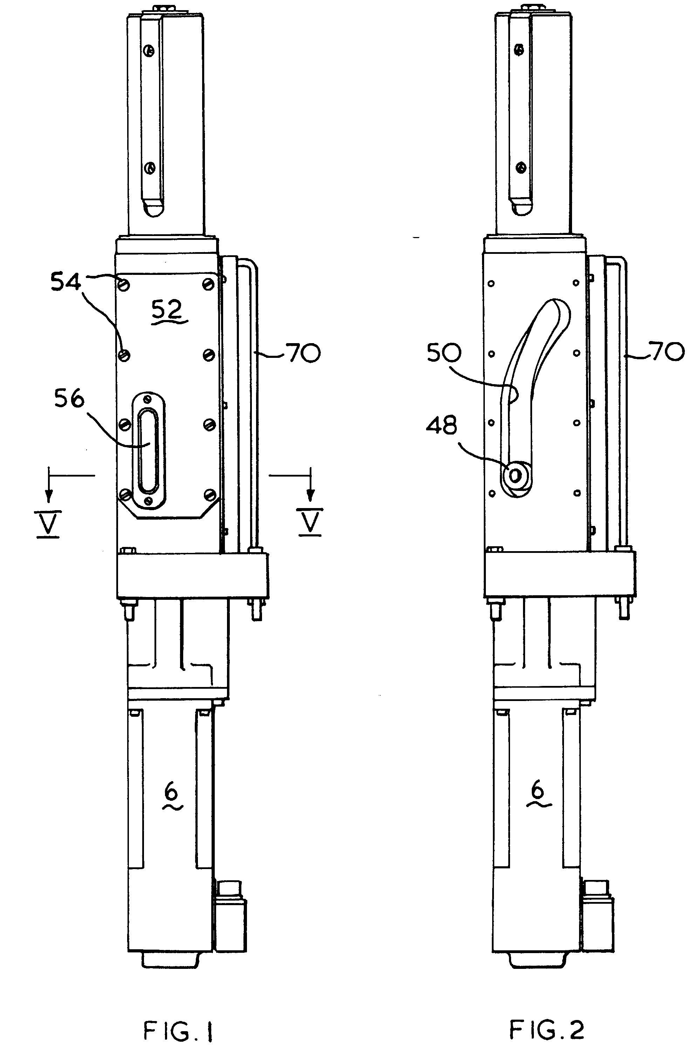

Lubricant is supplied to the mechanism through a passage 68 in the casing 2 from which a tube 70 leads to the opening 46 and the passage 44 in the cylinder block 30. The lubricant thus passes into an annular space formed between the lip 36, the scraper 38, the ring 42 and the outside of the rod 22. Lubricant passes from this annular space, assisted by the up and down movement of the rod 22, into the helical groove 33 of the bearing surface 32 and thence into the annular space between the relieved portion 35 of the cylinder block 30 and the rod 22. From here the lubricant passes through the cam slot 50 into the lubrication chamber 58. The level of lubricant in the chamber can be viewed through the viewing glass 56. When the rod 22 is in its lowermost position (see Figure 2), lubricant can accumulate in the chamber 58 up to the level of the passageway 64 in the threaded member 62. Excess lubricant flows through this passageway into the annular space between the spindle 12 and the bore 24 and can then work its way around the spindle 12, through a clearance between the ring 15 and the bearings 14, past the bearings 14 and the coupling 10 to an exit or waste 74.

Appropriate seals 72 are provided between the casing 2 and the cylinder block 30, and the arrangement provides a system whereby not only is sufficient lubrication of the cam roll 48 and cam track 50 secured, but the spindle 12, the nut 18 and the bearings 14 are also lubricated.

## Claims

1. A lift and twist mechanism,
comprising:
a cylinder block (30),
a rotary motor (6) secured to the block (30),
a spindle (12) driven by the motor (6),
a rod (22)connected to the spindle (12) so that the rod is driven axially by rotation of the spindle, the rod (22) comprising a central bore(24) in which at least part of the spindle lies,
a cam roll (48) attached to the rod (22),
a cam track (50) formed in the cylinder block (30) in which the cam roll (48) runs so that on axial movement of the rod (22) a desired rotational movement of the rod (22) takes place,
a cover (52) extending over at least the length of the cam track (50) and providing a lubrication chamber (58),
means for supplying lubricant to the lubrication chamber (58),
and a passageway through the cam roll (48) leading from the lubrication chamber to the central bore of the rod (22).

2. A mechanism according to claim 1, wherein the motor (6) is an electric motor and the spindle (12) is threaded and carries a nut which is held in a recess in the rod (22).

3. A mechanism according to one of claims 1 and 2, wherein:
the cylinder block (30) comprises a bearing surface (32) and a passage (44) through which lubricant can be supplied to the bearing surface (32),
and the rod (22) is mounted for sliding movement through the bearing surface, an annular space being formed between the rod (22) and a relieved portion (35) of the block (30) so that lubricant can flow past the bearing surface (32) into the annular space between the rod and the block and thence to the lubrication chamber.

4. A mechanism according to any preceding claim, wherein the motor is connected to the spindle by a coupling (10), and lubricant can flow from the lubrication chamber through the passageway in the cam roll (48), to the central bore of the rod and thence around the coupling to an exit (74).
